# EUROPEAN PATENT SPECIFICATION

(11) **EP 3 991 571 B1**
(45) Date of publication and mention of the grant of the patent: **23.07.2025**
(21) Application number: 20832453.3
(22) Date of filing: 24.06.2020
(51) Int. Cl.: A23L 19/00, A23L 29/206

(54) **THICKENER, METHOD FOR PRODUCING SAME, AND FOOD/BEVERAGE PRODUCT CONTAINING SAME**
VERDICKUNGSMITTEL, VERFAHREN ZU SEINER HERSTELLUNG UND DIESES ENTHALTENDES NAHRUNGSMITTEL/GETRÄNK
ÉPAISSISSANT, SON PROCÉDÉ DE FABRICATION ET PRODUIT ALIMENTAIRE/BOISSON LE CONTENANT

(30) Priority: 25.06.2019 JP 2019116902
(43) Date of publication of application: 04.05.2022
(73) Proprietor: Mizkan Holdings Co., Ltd., Handa-shi, Aichi 475-8585 (JP)
(72) Inventor: HIBI Naruhiro, Handa-shi, Aichi 475-8585 (JP)
(74) Representative: Mewburn Ellis LLP
(86) International application number: PCT/JP2020/024737
(87) International publication number: WO 2020/262432

(56) References cited:
- WO-A1-96/32852
- JP-A- 2008 301 811
- JP-A- 2016 054 737
- US-A1- 2011 136 176
- TOUSHIK SAZZAD HOSSEN ET AL: "Functional Applications of Lignocellulolytic Enzymes in the Fruit and Vegetable Processing Industries : Applications of lignocellulolytic enzymes...", JOURNAL OF FOOD SCIENCE, vol. 82, no. 3, 2 February 2017 (2017-02-02), US, pages 585 - 593, XP055916650, ISSN: 0022-1147, Retrieved from the Internet <URL:https://api.wiley.com/onlinelibrary/tdm/v1/articles/10.1111%2F1750-3841.13636> DOI: 10.1111/1750-3841.13636

## Description

### TECHNICAL FIELD

The present disclosure relates to a thickener, a method for producing the thickener, and a food/beverage product containing the thickener.

### BACKGROUND ART

Thickeners including natural thickeners and synthetic thickeners have been used as food additives to improve the viscous behaviors or viscosity of food products. However, most of these thickeners are purified and produced through processes such as a chemical synthesis process, a chemical treatment process, an extraction process, a concentration process, a decomposition process, and a fermentation process and the process for the production of the thickeners is very complicated. For example, carboxymethyl cellulose sodium salt (CMC) is produced by the reaction of monochloroacetic acid or a sodium salt thereof with alkaline cellulose. This production requires a purification process after the synthesis thereof to remove impurities produced by a side reaction or the like.

On the other hand, there are few examples of the use of vegetables as thickeners. An example is only known in which the viscous behavior of the visitable is reduced and the visitable is used as a low-viscosity vegetable juice (see Patent Literature 1). Patent Literature 2 concerns a fiber-derived homogeneous colloidal dispersions or gels that are prepared by enzyme hydrolysis and subsequent mechanical disintegration. The use of a high-viscosity vegetable or vegetable paste capable of adjusting its viscosity as a thickener has not been known yet.

### CITATION LIST

### Patent Literature

Patent Literature 1: JP 2008-301811 A1
Patent Literature 2: WO 96/32852 A1

### SUMMARY

### Technical Problem

An object of the present disclosure is to provide a thickener which can be produced without chemical treatment processes, the thickener being also safe and having excellent thickening properties to be added to foods.

### Solution to Problem

To solve the above problem, the inventor has conceived of the use of a plant such as a vegetable and a fruit as a raw material for a thickener. However, a sufficient viscosity cannot be achieved by simply pulverizing or finely dividing the vegetable. On the other hand, when the pulverization or finely-dividing treatment is combined with a treatment with cellulase as disclosed in Patent Literature 1, the viscous behavior may deteriorate. In these situations, the inventor has made extensive and intensive studies and found that the viscous behavior of a resultant plant paste is increased unexpectedly when a treatment with a lignin-degrading enzyme is combined with the pulverization or finely-dividing treatment. Based on this finding, the present disclosure has been accomplished.

That is, a thickener according to the present disclosure is obtained by subjecting a disruption product of a plant (also referred to as a "plant disruption product", hereinafter) to a pulverization or finely-dividing treatment simultaneously with or after a treatment with a lignin-degrading enzyme (also referred to as a "lignin-degrading enzyme treatment", hereinafter), wherein the 50% particle diameter after the pulverization or finely-dividing treatment is 20 to 100 µm. The thickener according to the present disclosure is very easy to use since it uses a natural product having a long history of consumption as food, e.g., a vegetable and a fruit, as a raw material. In addition, the thickener according to the present disclosure is useful as a material not only for the thickener but also for functional food since the thickener contains dietary fibers abundantly. The food/beverage product according to the present disclosure includes the thickener according to the present disclosure.

A method for producing the thickener according to the present disclosure includes subjecting a plant disruption product to a pulverization or finely-dividing treatment simultaneously with or after a lignin-degrading enzyme treatment. The method according to the present disclosure utilizes, as the raw material, the natural product having a long history of consumption as food. Therefore, the method does not require any chemical synthesis and/or any chemical treatment and does not require the removal of by-products. As a result, a highly safe product can be produced and the production process and/or treatment can be simplified compared to those of the conventional synthetic thickeners. A method for producing a food/beverage product according to the present disclosure includes adding the thickener according to the present disclosure.

### Advantageous Effects

According to the present disclosure, it is possible to provide a thickener which can be obtained without chemical treatment processes, the thickener being safe and having excellent thickening properties to be added to foods.

### BRIEF DESCRIPTION OF DRAWINGS

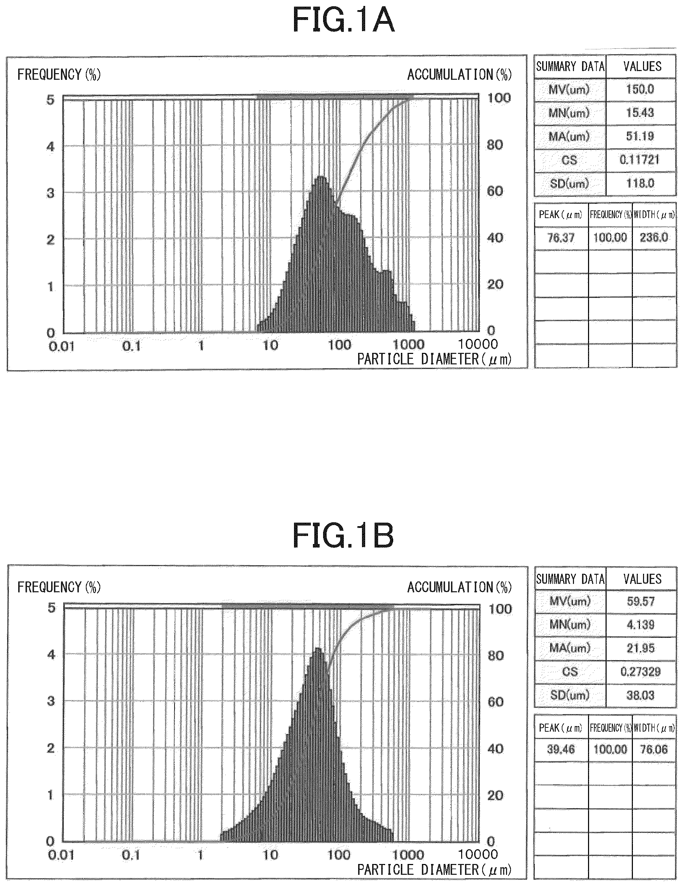

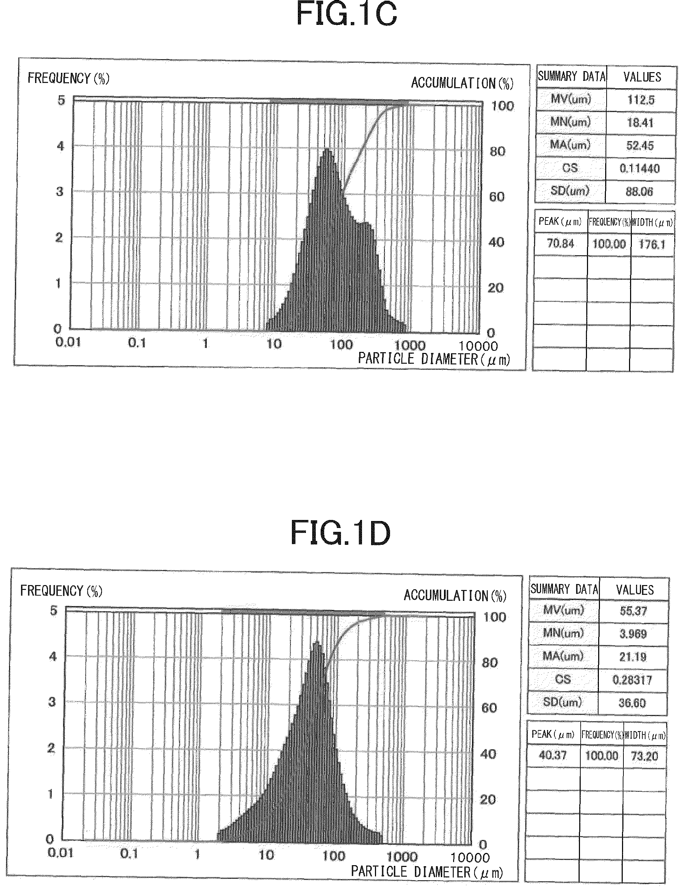

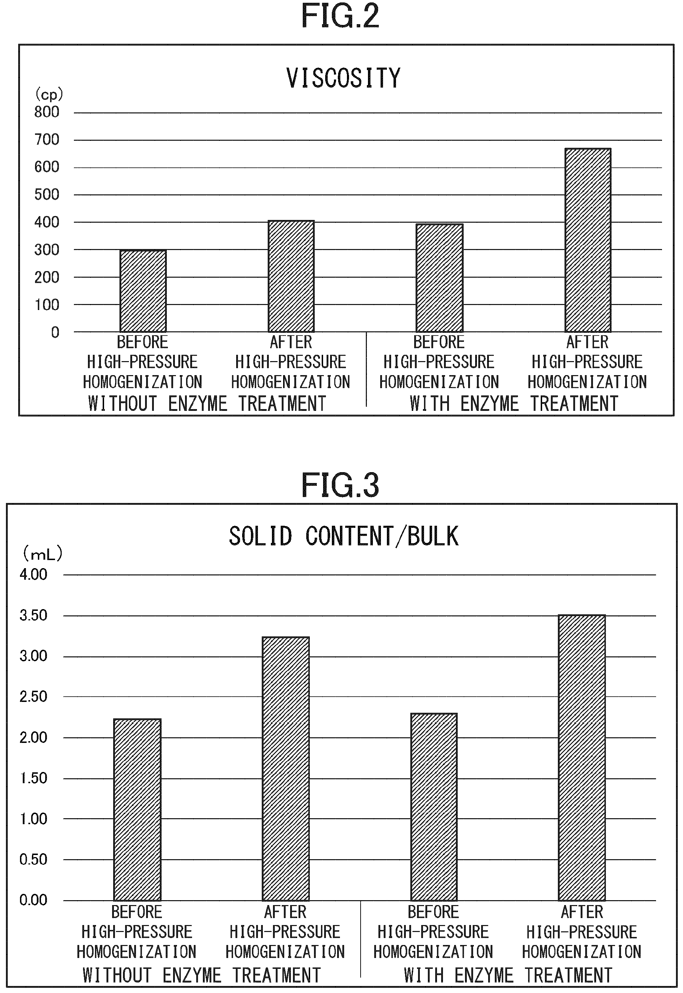

FIG. 1A is a graph showing measurement results of a particle size distribution before a high-pressure homogenization treatment without an enzyme treatment. FIG. 1B is a graph showing measurement results of a particle size distribution after the high-pressure homogenization treatment without the enzyme treatment. FIG. 1C is a graph showing measurement results of a particle size distribution before the high-pressure homogenization treatment with the enzyme treatment. FIG. 1D is a graph showing measurement results of a particle size distribution after the high-pressure homogenization treatment with the enzyme treatment (present disclosure). FIG. 2 is a graph showing the measurement results of viscosity in which a vertical axis represents the viscosity (unit: cp). FIG. 3 is a graph showing the measurement results of a "solid content/bulk" in which a vertical axis represents the "solid content/bulk" (unit: mL).

### DESCRIPTION OF EMBODIMENT

A thickener according to the present disclosure is obtained by subjecting a plant disruption product to a pulverization or finely-dividing treatment simultaneously with or after a lignin-degrading enzyme treatment. The method for producing the thickener according to the present disclosure includes subjecting the plant disruption product to the pulverization or finely-dividing treatment simultaneously with or after the lignin-degrading enzyme treatment.

The reason why the viscous behavior of a plant paste is drastically improved by subjecting the plant disruption product to both the lignin-degrading enzyme treatment and the pulverization or finely-dividing treatment has not been completely understood at this time. It is probably assumed that lignin is moderately degraded, and accordingly, the defibration of cellulose becomes easy, increasing in viscosity. However, it is extremely difficult to analyze the structure or properties of the thickener and to numerically indicate or show the structure or the properties. Also, such analysis requires excessive economic expenses. Therefore, it is impossible to comprehensively describe the results of the analysis in the appended claims. Accordingly, it can be said that it is impossible or impractical to directly identify the thickener of this embodiment with respect to the structure or properties thereof.

Hereinafter, an embodiment of the method for producing the thickener will be described.

(Plants) Examples of the plant that can be used as a raw material include a plant belonging to the genus Brassica, such as broccoli, cabbage, turnip, Japanese mustard spinach (*komatsuna*)*,* turnip rape, rapeseed, cauliflower, brussels sprout, kohlrabi, kale, potherb mustard (*mizuna*)*,* turnip greens (*nozawana*)*,* Chinese cabbage, and pak choi (Qing geng cai), and leaf mustard (Brassica juncea) as well as paprika, green pepper, eggplant, cucumber, tomato, okra, pumpkin, oriental melon, avocado, mulukhiya (nalta jute), spinach, lettuce, perilla (*siso*), carrot, shepherd's purse (capsella bursa-pastoris), daikon radish (Japanese radish), Japanese horseradish (*wasabi*)*,* burdock, sugar beet, sweet potato, potato, common coffee, Japanese chestnut (castanea crenata), sesame, buckwheat, walnut, sunflower, mango, fig tree, grape, and the like. Among these plants, plants belonging to the genus Brassica oleracea such as broccoli and cabbage are preferred. It is preferred that each of these plants is used in the form of a whole plant body including a stem, a flower, a flower bud, a leaf, and a fruit body. Only one of these plants may be used, or a combination of two or more of these plants may be used.

(Heating Step) In this embodiment, the raw material is crushed or disrupted to prepare a plant disruption product. To soften the material, it is preferred to heat the raw material before the disruption step. The heating may include steaming, simmering, boiling, baking, sauteing, frying, smoking, heating with a microwave oven, or the like as long as the plant that serves as the raw material is softened to some extent. Steaming is preferred among them.

For example, steaming may be performed in a usual manner as described below. First, water is boiled in a pan to prepare hot water for steaming, and then a basket steamer (i.e., a steamer made by braiding a bamboo or wood material) including a plant to be heated is placed on the pan. The water is continuously heated and a lid is kept on the basket steamer to allow the inside of the basket steamer to be constantly filled with steam. The plant is steamed in this state for about 30 minutes at a temperature in a range between 80°C or more and 100°C or less, preferably in a range between 85°C or more and 100°C or less.

The steaming condition may be appropriately adjusted such that the plant can be disrupted easily in a disruption step, which will be described below. For example, the steaming condition includes a time period in a range between 5 minutes or more and 90 minutes or less, preferably between 15 minutes or more and 60 minutes or less, more preferably between 25 minutes or more and 60 minutes or less under a pressure in a range between the ambient pressure or more and 0.2 MPa or less, preferably the ambient pressure.

(Disruption Step) In this step, the plant raw material or the heated plant product obtained by the heating step is disrupted to obtain the plant disruption product. By carrying out this step, the plant disruption product having a particle diameter acceptable for the pulverization or finely-dividing treatment, which will be described below, is prepared. For example, the particle diameter is 2 mm or less, preferably 1 mm or less, more preferably 500 µm or less, still more preferably 100 µm or less. The method for the disruption treatment is not particularly limited. For example, the method includes a disruption method by using a homogenizer that pulverizes the plant raw material or the heated plant product by shearing force or a mixer that grinds the plant raw material or the heated plant product by cutting force. The addition of water during the disruption is not essential. However, water may be added during the disruption depending on the amount of water in the heated plant product. With respect to the temperature condition, it is preferred to adjust to the temperature in a range between 10°C or more and 40°C or less. The plant disruption product includes a plant disruption product that has not undergone the heating step.

(Lignin-Degrading Enzyme Treatment) The plant disruption product obtained by the disruption step is reacted with the lignin-degrading enzyme to partially degrade the lignin contained in the raw material. As the lignin-degrading enzyme, a lignin peroxidase, a manganese peroxidase or a laccase each produced by a white rot fungus may be used. Alternatively, it is also possible to use any types of mushrooms that are classified into the group of white rot fungi to directly utilize the enzyme contained in the mushroom body. However, the method for the lignin-degrading enzyme treatment is not limited thereto. Only one of the above enzymes may be used, or a combination of two or more of the above enzymes may be used.

The enzyme treatment is carried out by adding the lignin-degrading enzyme to the plant disruption product and mixing them. When the pulverization or finely-dividing treatment, which will be described below, is carried out simultaneously with the enzyme treatment, the pulverization or finely-dividing treatment is carried out after the addition of the enzyme to the plant disruption product. The amount of the enzyme to be used may vary depending on the activity of the enzyme. The amount of the enzyme may be in a range between 0.01% by mass or more and 2% by mass or less, more preferably between 0.1% by mass or more and 1% by mass or less, relative to the amount of the plant disruption product. The timing of the addition of the enzyme may be any timing before the pulverization or finely-dividing treatment step, which will be described below.

The treatment temperature condition may be in a range between 40°C or more and 60°C or less, preferably between 45°C or more and 55°C or less. The treatment pH condition may be in a range between 4 or more and 8 or less, preferably between 5 or more and 7 or less. The treatment time condition may be in a range between 10 hours or more and 36 hours or less, preferably between 15 hours or more and 30 hours or less, more preferably between 18 hours or more and 24 hours or less. It is preferred to continue stirring or shaking after the addition of the enzyme for a more efficient enzyme reaction. After the completion of the enzyme reaction, the enzyme is deactivated by heating to 90°C or more.

(Pulverization or Finely-Dividing Treatment) In this embodiment, the pulverization or finely-dividing treatment is carried out simultaneously with the lignin-degrading enzyme treatment or the enzyme treatment product obtained by the lignin-degrading enzyme treatment step is subjected to the pulverization or finely-dividing treatment to improve the viscous behavior of the plant paste drastically and obtain the thickener. The pulverization or finely-dividing treatment is not particularly limited as long as a highly viscous plant paste having a predetermined particle diameter, which will be described below, can be obtained. For example, a homogenization treatment (particularly high-pressure homogenization treatment) may be performed.

As a pretreatment for the pulverization or finely-dividing treatment, the solid content in the enzyme treatment product is adjusted to 2.0% by mass or more to 6.0% by mass or less, preferably 2.0% by mass or more to 5.0% by mass or less, more preferably 2.2% by mass or more to 4.0% by mass or less. When the solid content falls within the above-mentioned ranges, the enzyme treatment product has better handling performance to be handled easily. The method for adjusting the solid content is not particularly limited and may include concentration by hydrolysis or heating, for example.

The pulverization or finely dividing in this step may be performed by a device such as a homogenizer, a blender, a mixer, a mill, a kneader, a pulverizer, a crusher, a grinder, and the like. A dry pulverization mode or a wet pulverization mode may be employed. The treatment temperature condition is not particularly limited, and high-temperature pulverization, ambient-temperature pulverization, or low-temperature pulverization may be employed. For example, as the dry-mode fine pulverizer, a medium-stirring mill such as a dry-mode bead mill and a ball mill (e.g., a rolling type, a vibration type), a jet mill, a high-rotation-type impact mill (e.g., a pin mill), a roll mill, a hammer mill, or the like may be used. For example, as the wet-type fine pulverizer, a medium-stirring mill such as a bead mill, a ball mill (e.g., a rolling-type mill, a vibration-type mill, a planetary mill), a roll mill, a colloid mill, a Star Burst mill, a homogenizer (particularly a high-pressure homogenizer), or the like may be used. To obtain a paste containing food fine particles that have been subjected to the wet-mode finely pulverizing treatment and therefore have specific shapes, a medium-stirring-type mill (e.g., a ball mill, a bead mill) and a homogenizer (particularly a high-pressure homogenizer) may be used more preferably. Among them, the homogenizer (particularly high-pressure homogenizer) and the medium-stirring-type mill may be used preferably.

When the high-pressure homogenizer is used in this step, any type of device may be used as long as the device can achieve a shearing treatment under the condition of 1 MPa or more. The treatment pressure condition may be 1 MPa or more, preferably in a range between 20 MPa or more and 300 MPa or less, more preferably in a range between 40 MPa or more and 200 MPa or less, still more preferably in a range between 60 MPa or more and 100 MPa or less. The frequency of the treatment is 1 pass or more, preferably in a range between 2 passes or more and 5 passes or less

By subjecting the plant disruption product to both the lignin-degrading enzyme treatment and the pulverization or finely-dividing treatment as described above, the thickener (highly viscous plant paste) according to the present disclosure can be produced. If necessary, a sterilization/disinfection treatment or a treatment such as concentration, purification, powderization may be carried out after the pulverization or finely-dividing treatment. The heating temperature in these treatments is not particularly limited. Hereinafter, an embodiment of the thickener obtained by the above production method will be described.

(Plant-Derived Thickener) The thickener of this embodiment is a highly viscous plant paste which has drastically improved viscosity as the result of the lignin-degrading enzyme treatment and the pulverization or finely-dividing treatment to the plant disruption product. The 50% particle diameter (median diameter) after the pulverization or finely-dividing treatment is 20µm or more and 100 µm or less, preferably in a range between 20 µm or more and 80 µm or less, more preferably in a range between 20 µm or more and 60 µm or less, still more preferably in a range between 20 µm or more and 50 µm or less. The 50% particle diameter can be measured using a common laser diffraction particle size distribution measurement device (e.g., Microtrac MT3300 EXII, MicrotracBEL Corporation).

The viscosity measured with a B-type viscometer (20°C) after the pulverization or finely-dividing treatment is 450 mPa*s (450 cp) or more, preferably in a range between 480 mPa*s (480 cp) or more and 1000 mPa*s (1000 cp) or less, more preferably in a range between 480 mPa*s (480 cp) or more and 950 mPa*s (950 cp) or less. The viscosity of the plant paste drastically increases by more than 1.5 times between before and after the high-pressure homogenization treatment (80 MPa, 1 pass). As mentioned above, the thickener of this embodiment shows extremely high viscous behavior, and therefore can be expected to be added to a food/beverage product to adjust the viscosity of the food/beverage product.

Furthermore, with respect to the high viscous behavior, "solid content/bulk" measured after the pulverization or finely-dividing treatment is 2.54 mL or more, preferably 2.96 mL or more, more preferably 3.23 mL or more. The "solid content/bulk" as used herein is measured in the following manner. Five grams (5 g) of a plant paste is placed in a 15-mL centrifuge tube CFT1500 (LMS Co., Ltd.) and is then centrifuged with a swing rotor at 3000 rpm for 3 minutes. The volume of precipitates after the centrifugation is determined as a "solid content/bulk" (mL). The term "solid content/bulk" herein is used as a measure or indicator showing the state of cellulose. That is, the "solid content/bulk" obtained by the centrifugation decreases as the degree of defibration of the cellulose decreases, while the "solid content/bulk" obtained by the centrifugation increases as the degree of defibration of the cellulose increases.

It is preferable to refrigerate or freeze-store the highly viscous plant paste at 10°C or lower to prevent the decay of the highly viscous plant paste when the highly viscous plant paste that has been undergone the pulverization or finely-dividing treatment is stored for a long period as it is. Alternatively, the highly viscous plant paste may be stored by being powderized with a method such as concentration to dryness.

The thickener according to this embodiment may contain only the highly viscous plant paste obtained by the above-mentioned production method, or may further contain a common food material or additive which is acceptable in the production of foods as long as the function as the thickener may not deteriorate. The amount of components to be added other than the highly viscous plant paste may be, for example, in a range between more than 0% by mass and 70% by mass or less, preferably more than 0% by mass and 50% by mass or less, more preferably more than 0% by mass and 30% by mass or less relative to the whole amount of the thickener. The highly viscous plant paste is useful as a material for a functional food product since it contains dietary fibers abundantly.

(Food/Beverage Product and Method for Production Same) Hereinafter, an embodiment of the food/beverage product and an embodiment of the method for the production thereof according to the present disclosure will be described. The type of the food/beverage product according to this embodiment is not particularly limited as long as the thickener (highly viscous plant paste) described above is contained. The thickener may be added to a food/beverage product similar to a thickener that serves as a common food additive. Therefore, the method for producing the food/beverage product according to this embodiment is not particularly limited, and the thickener may be added at any stage in a food/beverage product production process. The amount of the thickener to be added to the food/beverage product may be any amount as long as the desired property can be imparted to the food/beverage product, and is not particularly limited as long as the flavor inherent in the food/beverage product cannot be adversely affected.

### EXAMPLES

Hereinafter, the embodiment of the present disclosure will be described with reference to examples. However, the present disclosure is not limited to these examples.

(Preparation of Samples) One thousand grams (1000 g) of broccoli (whole body including flower buds and stems is used) was steamed using a home-use steamer at the temperature in a range between 85°C or more and 100°C or less for 30 minutes. Then, 562 g of the steamed broccoli was collected, water in an amount that was 1.5 times (843 g) that of the broccoli was added to the broccoli. Then, the resultant mixture was disrupted using a homogenizer (product name: "Physcotron", manufactured by Microtec Co., Ltd.) at 25°C for 5 minutes. Then, 1.5 g of a lignin-degrading enzyme laccase (product name: "Laccase M120", manufactured by Amano Enzyme Inc.) was added to 500 g of the obtained broccoli disruption product (plant disruption product), and the shaking (100 rpm) was continuously performed at 50°C for 21 hours to obtain an enzyme treatment product.

The obtained enzyme treatment product was heated at 90°C for 10 minutes to deactivate the enzyme, and the solid content in the enzyme treatment product was adjusted to 2.8% by mass by hydrolysis. The solid content was determined by placing 5 g of the sample in a petri dish, drying the sample at 70°C for 15 hours to obtain a dried product, and measuring the mass of the obtained dried product. Subsequently, 500 g of the enzyme treatment product in which the solid content had been adjusted was treated (80 MPa, 1 pass) with a high-pressure homogenizer (product name: "LAB2000", SMT Co., Ltd.) to obtain a broccoli paste (highly viscous plant paste), and the obtained broccoli paste was used as a sample. As a control, a broccoli paste which had been prepared in the same manner as mentioned above except that the enzyme treatment and the enzyme deactivation treatment were not carried out was used. Each of the samples was measured with respect to a 50% particle diameter (median diameter), viscosity and a "solid content/bulk" in the following manners.

(Measurement of Particle Size Distribution) The particle size distribution was measured using a laser diffraction particle size distribution measurement device "Microtrac MT3300 EXII" (manufactured by MicrotracBEL Corporation) to determine the 50% particle diameter (median diameter). Water was used as a solvent for the measurement, and DMS2 (Data Management System version II" manufactured by MicrotracBEL Corporation) was used as measurement application software. The measurement was carried out as follows: a washing button in the measurement application software was pressed to carry out washing, and a SetZero button in the software was pressed to carry out zero adjustments, and the sample was introduced directly by sample loading until the concentration reached a value falling within in a proper concentration range. An ultrasonic treatment button in the software was pressed to carry out an ultrasonic treatment at 30 kHz and 40 W for 180 seconds, then a defoaming treatment was carried out three times, then laser diffraction was carried out at a flow rate of 50% and for a measurement time of 10 seconds. A result of the measurement was employed as a measurement value. The measurement was carried out by setting measurement conditions as follows: the expression of distribution: by volume; the refractive index of particles: 1.60; the refractive index of solvent: 1.33; the measurement upper limit (µm): 2000; and the measurement lower limit (µm): 0.021.

(Measurement of Viscosity) Fifty grams (50 g) of the sample was placed in a viscosity measurement container, and the viscosity of the sample was measured using a BII-type viscometer (Toki Sangyo Co., Ltd.) having a No.3 spindle attached thereto. The measurement was carried out while rotating the viscometer at the number of revolutions of 30 rpm for 2 minutes.

(Measurement of "Solid Content/Bulk") Five grams (5 g) of the sample was placed in a 15-mL centrifuge tube (product name: "CFT1500", LMS Co., Ltd.), then a swing rotor RS-4/6 was set in a benchtop centrifuge machine (product name: "KUBOTA5200", manufactured by Kubota Corporation), and then the sample was centrifuged using the centrifuge machine at 3000 rpm for 3 minutes. The volume of the obtained precipitates was determined as a "solid content/bulk" (mL).

The results of the measurements are shown in Table 1. The results of the particle size distribution measurement are shown in FIGS. 1A to 1D. The results of the viscosity measurement are shown in FIG. 2. The results of the "solid content/bulk" measurement are shown in FIG. 3. FIG. 1A shows the particle diameter distribution obtained before the high-pressure homogenization treatment, in which the enzyme treatment was not carried out. FIG. 1B shows the particle diameter distribution obtained after the high-pressure homogenization treatment, in which the enzyme treatment was not carried out. FIG. 1C shows the particle diameter distribution obtained before the high-pressure homogenization treatment, in which the enzyme treatment was carried out. FIG. 1D shows the particle diameter distribution obtained after the high-pressure homogenization treatment, in which the enzyme treatment was carried out (present disclosure). In FIG. 2, the vertical axis represents the viscosity (unit: cp). In FIG. 3, the vertical axis represents the "solid content/bulk" (unit: mL).

**Table 1**

| | | 50% PARTICLE DIAMETER (*µ*m) |
|---|---|---|
| WITHOUT ENZYME TREATMENT (CONTROL) | BEFORE HIGH-PRESSURE HOMOGENIZATION | 76.4 |
| | AFTER HIGH-PRESSURE HOMOGENIZATION | 39.5 |
| WITH ENZYME TREATMENT | BEFORE HIGH-PRESSURE HOMOGENIZATION | 70.8 |
| | AFTER HIGH-PRESSURE HOMOGENTZATTON | 40.4 |

| | | VISCOSITY (cp) |
|---|---|---|
| WITHOUT ENZYME TREATMENT (CONTROL) | BEFORE HIGH-PRESSURE HOMOGENIZATION | 316 |
| | AFTER HIGH-PRESSURE HOMOGENIZATION | 436 |
| WITH ENZYME TREATMENT | BEFORE HIGH-PRESSURE HOMOGENIZATION | 396 |
| | AFTER HIGH-PRESSURE HOMOGENIZATION | 672 |

| | | SOLID CONTENT/BULK (mL) |
|---|---|---|
| WITHOUT ENZYME TREATMENT (CONTROL) | BEFORE HIGH-PRESSURE HOMOGENIZATION | 2.23 |
| | AFTER HIGH-PRESSURE HOMOGENIZATION | 3.23 |
| WITH ENZYME TREATMENT | BEFORE HIGH-PRESSURE HOMOGENIZATION | 2.29 |
| | AFTER HIGH-PRESSURE HOMOGENIZATION | 3.51 |

From these results, it was found that the viscous behavior of the plant paste was drastically increased when the lignin-degrading enzyme treatment was combined with the high-pressure homogenization treatment. The principle of this phenomenon is unknown. However, it is probably assumed that lignin was degraded moderately and, as a result, the defibration of cellulose becomes easy, increasing in viscosity. The plant paste shows extremely high viscous behavior, and accordingly, it is expected that the plant paste can be added to the food/beverage product to adjust the viscosity of the food/beverage product similar to thickeners that have been used as common food additives.

The thickener (highly viscous plant paste) according to this embodiment which is prepared as described above is highly safe and very easy to use since the thickener uses, as a raw material, a vegetable having a long history of consumption as food. In addition, the thickener contains dietary fibers abundantly. Therefore, the thickener is also useful not only for the thickener but also for the functional food material.

## Claims

1. A thickener obtained by subjecting a disruption product of a plant to a pulverization or finely-dividing treatment simultaneously with or after a treatment with a lignin-degrading enzyme, wherein the 50% particle diameter after the pulverization or finely-dividing treatment is 20 to 100 µm.

2. The thickener according to claim 1, wherein a viscosity (a B-type viscometer, 20°C) is 450 mPa*s (450 cp) or more after the pulverization or finely-dividing treatment.

3. The thickener according to claim 1 or 2, wherein the plant belongs to genus Brassica.

4. The thickener according to any one of claims 1 to 3, wherein the lignin-degrading enzyme is a laccase.

5. A food/beverage product comprising the thickener according to any one of claims 1 to 4.

6. A method for producing a thickener comprising:
subjecting a disruption product of a plant to a pulverization or finely-dividing treatment simultaneously with or after a treatment with a lignin-degrading enzyme such that the 50% particle diameter after the pulverization or finely-dividing treatment is 20 to 100 µm.

7. The method according to claim 6, wherein the method comprises:
subjecting a disruption product of a plant to a treatment with a lignin-degrading enzyme to obtain an enzyme treatment product; and
subjecting the obtained enzyme treatment product to a homogenization treatment.

8. The method according to claim 6, wherein the method comprises:
disrupting a heated plant to obtain a plant disruption product;
subjecting the obtained plant disruption product to a treatment with a lignin-degrading enzyme to obtain an enzyme treatment product; and
subjecting the obtained enzyme treatment product to a homogenization treatment.

9. The method according to any one of claims 6 to 8, wherein the treatment with the lignin-degrading enzyme comprises adding a lignin-degrading enzyme in a range between 0.01 % by mass or more and 2% by mass or less to the plant disruption product and reacting the resultant product at a temperature in a range between 40°C or more and 60°C or less for 10 hours or more to 36 hours or less.

10. The method according to any one of claims 7 to 9, wherein the homogenization treatment is carried out using an enzyme treatment product having a solid content of 2.0% by mass or more to 6.0% by mass or less under a condition of 1 MPa or more.

11. A method for producing a food/beverage product comprising:
adding the thickener according to any one of claims 1 to 4.

12. Use of the thickener according to any one of claims 1 to 4 in a food/beverage product.

## Patentansprüche

1. Verdickungsmittel, das durch Unterziehen eines Spaltprodukts einer Pflanze gegenüber einer Pulverisierungs- oder einer Feinverteilungsbehandlung gleichzeitig mit oder nach einer Behandlung mit einem Lignin-Abbauenzym erhalten wurde, wobei der 50%-Teilchendurchmesser nach der Pulverisierungs- oder der Feinverteilungsbehandlung 20 bis 100 µm beträgt.

2. Verdickungsmittel nach Anspruch 1, wobei die Viskosität (B-Typ-Viskosimeter, 20 °C) nach der Pulverisierungs- oder der Feinverteilungsbehandlung 450 MPa.s (450 cP) oder mehr beträgt.

3. Verdickungsmittel nach Anspruch 1 oder 2, wobei die Pflanze zur Gattung Brassica gehört.

4. Verdickungsmittel nach einem der Ansprüche 1 bis 3, wobei das Lignin-Abbauenzym eine Laccase ist.

5. Lebensmittel-/Getränke-Produkt, das ein Verdickungsmittel nach einem der Ansprüche 1 bis 4 umfasst.

6. Verfahren zur Herstellung eines Verdickungsmittels, das Folgendes umfasst:
das Unterziehen eines Spaltprodukts einer Pflanze gegenüber einer Pulverisierungs- oder einer Feinverteilungsbehandlung gleichzeitig mit oder nach einer Behandlung mit einem Lignin-Abbauenzym, so dass der 50%-Teilchendurchmesser nach der Pulverisierungs- oder der Feinverteilungsbehandlung 20 bis 100 µm beträgt.

7. Verfahren nach Anspruch 6, wobei das Verfahren Folgendes umfasst:
das Unterziehen eines Spaltprodukts einer Pflanze gegenüber einer Behandlung mit einem Lignin-Abbauenzym, um ein Enzymbehandlungsprodukt zu erhalten; und
das Unterziehen des erhaltenen Enzymbehandlungsprodukts gegenüber einer Homogenisierungsbehandlung.

8. Verfahren nach Anspruch 6, wobei das Verfahren Folgendes umfasst:
das Spalten einer erhitzten Pflanze, um ein Pflanzenspaltprodukt zu erhalten;
das Unterziehen des erhaltenen Pflanzenspaltprodukts gegenüber einer Behandlung mit einem Lignin-Abbauenzym, um ein Enzymbehandlungsprodukt zu erhalten; und
das Unterziehen des Enzymbehandlungsprodukts gegenüber einer Homogenisierungsbehandlung.

9. Verfahren nach einem der Ansprüche 6 bis 8, wobei die Behandlung mit dem Lignin-Abbauenzym das Zusetzen eines Lignin-Abbauenzyms in einem Bereich zwischen 0,01 Massen-% oder mehr und 2 Massen-% oder weniger zum Pflanzenspaltprodukt und das Umsetzen des entstandenen Produkts bei einer Temperatur im eine Bereich zwischen 40 °C oder mehr und 60 °C oder weniger für 10 Stunden oder mehr bis 36 Stunden oder weniger umfasst.

10. Verfahren nach einem der Ansprüche 7 bis 9, wobei die Homogenisierungsbehandlung unter Verwendung eines Enzymbehandlungsprodukts mit einem Feststoffgehalt von 2,0 Massen-% oder mehr bis 6,0 Massen-% oder weniger unter der Bedingung von 1 MPa oder mehr durchgeführt wird.

11. Verfahren zur Herstellung eines Lebensmittel-/Getränke-Produkts, das Folgendes umfasst:
das Zusetzen eines Verdickungsmittels nach einem der Ansprüche 1 bis 4.

12. Verwendung eines Verdickungsmittels nach einem der Ansprüche 1 bis 4 in einem Lebensmittel-/Getränke-Produkt.

## Revendications

1. Épaississant obtenu en soumettant un produit de séparation d'une plante à un traitement de pulvérisation ou de division fine simultanément avec ou après un traitement avec une enzyme dégradant la lignine, dans lequel le diamètre de particule de 50 % après le traitement de pulvérisation ou de division fine est de 20 à 100 µm.

2. Épaississant selon la revendication 1, dans lequel une viscosité (un viscosimètre de type B, 20°C) est de 450 mPa*s (450 cp) ou plus après le traitement de pulvérisation ou de division fine.

3. Épaississant selon la revendication 1 ou 2, dans lequel la plante appartient au genre Brassica.

4. Épaississant selon l'une quelconque des revendications 1 à 3, dans lequel l'enzyme dégradant la lignine est une laccase.

5. Produit alimentaire/boisson comprenant l'épaississant selon l'une quelconque des revendications 1 à 4.

6. Procédé de production d'un épaississant, comprenant l'étape consistant à :
soumettre un produit de séparation d'une plante à un traitement de pulvérisation ou de division fine simultanément ou après un traitement avec une enzyme dégradant la lignine de telle sorte que le diamètre de particule de 50 % après le traitement de pulvérisation ou de division fine soit de 20 à 100 µm.

7. Procédé selon la revendication 6, dans lequel le procédé comprend les étapes consistant à :
soumettre un produit de séparation d'une plante à un traitement avec une enzyme dégradant la lignine pour obtenir un produit de traitement enzymatique ; et
soumettre le produit de traitement enzymatique obtenu à un traitement d'homogénéisation.

8. Procédé selon la revendication 6, dans lequel le procédé comprend les étapes consistant à :
séparer une plante chauffée pour obtenir un produit de séparation de plante ;
soumettre le produit de séparation de plante obtenu à un traitement avec une enzyme dégradant la lignine pour obtenir un produit de traitement enzymatique ; et
soumettre le produit de traitement enzymatique obtenu à un traitement d'homogénéisation.

9. Procédé selon l'une quelconque des revendications 6 à 8, dans lequel le traitement avec l'enzyme dégradant la lignine comprend un ajout d'une enzyme dégradant la lignine dans une plage comprise entre 0,01 % en masse ou plus et 2 % en masse ou moins au produit de séparation de plante, et une réaction du produit résultant à une température dans une plage comprise entre 40°C ou plus et 60°C ou moins pendant 10 heures ou plus à 36 heures ou moins.

10. Procédé selon l'une quelconque des revendications 7 à 9, dans lequel le traitement d'homogénéisation est effectué en utilisant un produit de traitement enzymatique présentant une teneur en solides de 2,0 % en masse ou plus à 6,0 % en masse ou moins dans une condition de 1 MPa ou plus.

11. Procédé de production d'un produit alimentaire/de boisson comprenant l'étape consistant à :
ajouter l'épaississant selon l'une quelconque des revendications 1 à 4.

12. Utilisation de l'épaississant selon l'une quelconque des revendications 1 à 4 dans un produit alimentaire/de boisson.
